# EUROPEAN PATENT APPLICATION

(11) **EP 2 045 973 A1**
(43) Date of publication of application: **08.04.2009**
(21) Application number: 07117776.0
(22) Date of filing: 02.10.2007
(51) Int. Cl.: H04L 12/56, H04L 1/18, G06F 5/12

(54) **A memory buffer system and method for operating a memory buffer system for fast data exchange**

(71) Applicant: Deutsche Thomson OHG, 30625 Hannover (DE)
(72) Inventor: Siemens, Eduard, Sehnde 31319 (DE); Qiu, Xiaopeng, Chemnitz 09127 (DE)
(74) Representative: Schäferjohann, Volker

(57) **Abstract**

This invention relates to a design of an efficient buffer management model in order to increase the efficiency of data exchange between two process threads, - e.g. when implementing a network transport protocol stack.

This invention proposes to use an interconnected system of different kinds of memory buffers (100, 101, 102), implemented as asynchronous read/write ring buffers ARWRB. These buffers are organized in a way, in which data can be stored into the buffer or fetched from the buffer essentially avoiding synchronization means like mutexes or semaphores.

In contrast to the conventional buffer management model, three ring buffers, namely send ring buffer (100), send token ring buffer (101) and receive ring buffer (102), are used within the transport protocol stack.

## Description

The invention relates to a memory buffer system and a method for operating a memory buffer system for fast data exchange in a multi-thread environment.

### Background of the invention

In high-performance network attached computer systems the implementation of data transport protocols is usually organized in a multi-threaded fashion. Hereby, the tasks of handling sending user data as well as signaling data, handling receiving data and control information and the communication with a user application are delivered to different program threads or processes within the system.

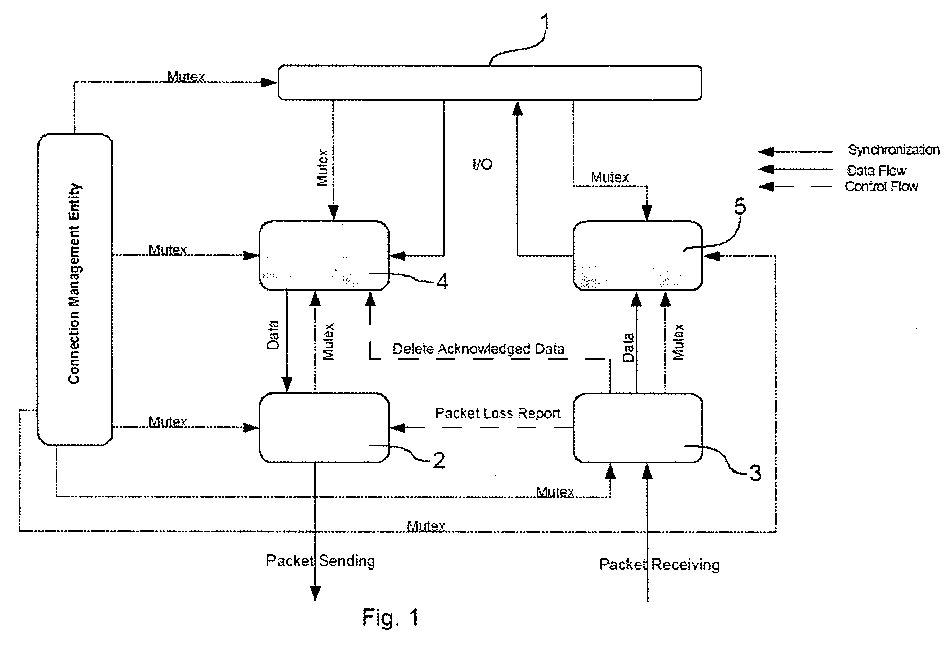

Fig. 1 shows a block diagram of a common data transport protocol implementation. Hereby, when an application starts data communication over a network system, it needs at least one thread for sending (send handler 2), one thread for receiving (receive handler 3) and an application thread 1 (API-thread) that transports data between the user application and a protocol stack. The send handler 2 is used to send data packets and control information to the network system. As soon as packet loss is detected, the send handler 2 retransmits lost packets. A send buffer 4 temporarily stores unacknowledged data, till an acknowledgment is delivered to the sender thread.

Receive handler 3 receives data from the network system and stores them into a receive buffer 5. In case of a packet loss detection, the receive handler 3 informs the send handler 2, so it can send a control packet with loss data information to the sender thread of the communication pair. Since different tasks according to Fig. 1 access shared data structures, those accesses must be synchronized. Conventionally, such synchronization is implemented by mutexes or semaphores.

While the send handler 2 and the receive handler 3 are function components, the send buffer 4 and the receive buffer 5 may be referred to as data components.

When the API-thread 1 has to write data into the send buffer 4, it applies a mutex or a semaphore to block the simultaneously reading access from the send handler 2. If the send handler 2 tries to read data from the send buffer 4 for sending, it also applies a mutex or semaphore to prevent a simultaneous access attempt from the API-thread. The access from receive handler 3 to receive buffer 5 is similar to that of the send handler 2.

The intensive use of mutexes and semaphores for thread synchronization decreases stack performance rapidly, since simultaneous access to the data, leads to waits for process threads. Moreover, it leads to a rapid increase of the number of necessary system calls for thread synchronization.

### The invention

It is the object of the invention to provide a more efficient memory buffer system and a method for operating a memory buffer system for fast data exchange in a multi-thread environment for more efficiently managing data exchange. Especially, the efficiency of data exchange between several threads shall be improved, i.e. when implementing a network transport protocol stack.

According to one aspect of the invention, a memory buffer system is provided, which is connected to a computer network system, and a network data transport protocol provided for data transport in the computer network system, comprising: a send memory ring buffer, configured to receive send data from the user application and submit the send data via a thread-implemented send handler, a receiving memory ring buffer, configured to receive receive data via a thread-implemented receive handler and pass data to the user application, and a send token ring buffer, configured to manage access to the sent data for the send handler and the receive handler.

According to another aspect of the invention, a method for operating a memory buffer system in a multi-thread environment for managing data exchange between a user application implemented on a computer, which is connected to a computer network system, and a network data transport protocol provided for data transport in the computer network system is provided, the method comprising steps of: in a send memory ring buffer, receiving send data from the user application and submitting the send data via a thread-implemented send handler, in a receiving memory ring buffer, receiving receive data via a thread-implemented receive handler and passing the receive data to the user application, and in a send token ring buffer, managing access to the sent data for the send handler and the receive handler.

The proposed memory buffer system and the method for operating the buffer system lead to a significant reduction of data copy operations within the computer network system and to a rapid reduction of synchronization operations. Such efficient buffer management, for example, is vital in order to implement data transfers of uncompressed 4k video data over 10 Gbit/s networks.

Since each of the proposed memory buffers is accessed at least from one execution thread for reading and at least from one execution thread for writing, those threads, that perform read access to the memory are referred to as reader thread, threads, performing writing access to the associated memory are referred to as writer threads.

In a preferred embodiment of the invention, at least one of the send memory ring buffer, the receiving memory ring buffer, and the send token ring buffer is comprising at least two pointers selected from the following group of pointers: a read pointer, configured to point at the beginning of a occupied memory area occupied by stored data readable by a reader thread, a write pointer, configured to point at the beginning of a still free memory area capable of receiving new stored data in a writer thread, and a filled pointer, configured to point at the beginning of a filled memory area at least partially filled with stored data, wherein the occupied memory area is located between the filled pointer and the read pointer, wherein still free memory area is located between the write pointer and the read pointer, and wherein the filled memory area is located between the write pointer and the filled pointer. In a further embodiment, all three of the pointers are provided in at least one of the ring buffers. In still a further embodiment, depending on the use of the memory ring buffer the filled pointer can be omitted, e.g. if no acknowledgement from a remote site is necessary.

According to a preferred embodiment of the invention, the read pointer is configured to move forward by an amount of read data which are read from the occupied memory area. The amount of free space is increased by the amount of read data.

In a further preferred embodiment of the invention, the write pointer is configured to move forward by an amount of written data which are written into the still free memory area. When data are written into a free region, the write pointer is moved forward by the amount of written data.

According to a further preferred embodiment of the invention, at least one of the read pointer and the filled pointer is configured to be exclusively moved by the reader thread.

In still a further preferred embodiment of the invention, a read pointer of the send memory ring buffer is configured to be exclusively moved by the send handler.

According to still a preferred embodiment of the invention, a filled pointer of the send memory ring buffer is configured to be exclusively moved by the receive handler.

In a preferred embodiment of the invention, the receiving memory ring buffer is comprising a further read pointer and a further write pointer. For example, such additional pointers may be provided in the receive memory ring buffer.

According to a preferred embodiment of the invention, the write pointer is configured to be exclusively moved by the writer thread.

In a further preferred embodiment of the invention, the send token ring buffer is configured to have the send handler recorded data packet information in the send token ring buffer.

According to a further preferred embodiment of the invention, the send token ring buffer is configured to provide data packet retransmission information to the send handler for a data packet retransmission.

In still a further preferred embodiment of the invention, the send memory ring buffer, the receiving memory ring buffer, and the send token ring buffer are implemented by an implementation selected from the following group of implementations: hardware implementation, embedded software implementation, and application layer process implementation.

### Description of preferred embodiments of the invention

Following preferred embodiments of the invention are described in detail by referring to Figures. In the Figures show:
- Fig. 1: a block diagram of a common data transport protocol implementation,
- Fig. 2: a schematic representation of an asynchronous read/write ring buffers (subsequently abbreviated as ARWRB) buffer management system,
- Fig. 3: a schematic representation for a process of a synchro- nization-free access to memory ring buffer,
- Fig. 4: a schematic representation of methods which can be im- plemented in the send token ring buffer,
- Fig. 5: a schematic representation of an interaction of the methods depicted in Fig. 4 with reader and writer threads,
- Fig. 6: a schematic representation of three methods which can be implemented in the send token ring buffer,
- Fig. 7: a schematic representation of an interaction of the methods depicted in Fig. 6,
- Fig. 8: shows a schematic representation of an interaction of send memory ring buffer- and send token ring buffer- methods within receive and send handler,
- Fig. 9: a schematic representation of five methods which can be implemented in the receive memory ring buffer, and
- Fig. 10: a schematic representation of an interaction of the methods depicted in Fig. 9.

The present invention, in a preferred embodiment, proposes to use an interconnected system of different kinds of memory buffers, implemented as asynchronous read/write ring buffers. The ring buffers are organized in a way, in which data can be stored into the ring buffer or fetched from the ring buffer essentially avoiding synchronization means like mutexes or semaphores.

Admittedly, one mutex may still be used within a receive ring buffer in case of a transmission of irregular packets, the occurrence of irregular packets can, however, be kept rarely. The term of irregular packets implies a presumption, that mostly, data are transmitted in constant-size chunks, so called regular packets. Only in cases of some exceptions, data packets, smaller than regular packets are transmitted over the network. Such short packets are called irregular packets, i.e. when there are not enough data to assemble a regular packet.

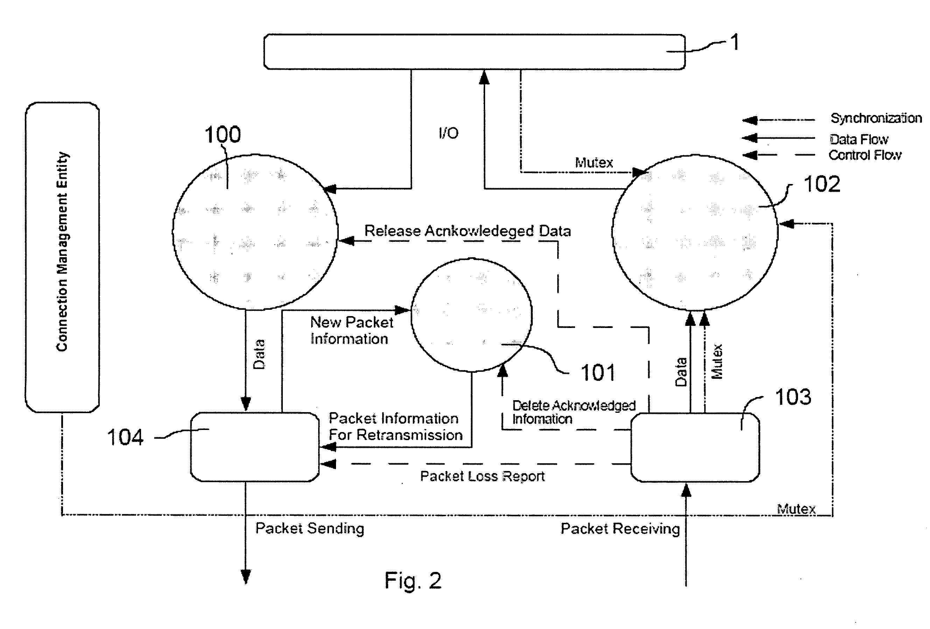

Fig. 2 a schematic representation of a basic ARWRB buffer management system.

In contrast to the conventional buffer management system (see Fig. 1), three memory ring buffers, namely a send memory ring buffer (SRB) 100, a send token ring buffer (STRB) 101 and a receive memory ring buffer (RRB) 102, are used within a data transport protocol stack.

Necessary memory space for the SRB 100, the STRB 101 and the RRB 102 is preferably allocated at the initialization phase of the transmission system. So, during ring buffer operation, no buffer growth or shrinking should be performed. Besides a main application thread 1, in which API calls can be processed, one sending and one receiving threads are also started during the initialization phase. When a receive handler 103 of a data sender receives a data acknowledgement, it releases the corresponding space of buffer within the SRB 100. It also deletes the correspondent token from the STRB 101. The send handler 104, besides, records all transmitted packet information within the STRB 101. So, in case of packet retransmission, the sender thread (send handler 104) can directly refer to the buffer address, associated with retransmitted sequence number.

While the send handler 104 and the receive handler 103 are function components, the SRB 100, the STRB 101 and the RRB 102 may referred to as data components.

A reader thread of the SRB 100 (send handler 104) can access the SRB 100 without requesting system calls, e.g. mutex, to stop a writer thread (API-thread 1) which tries to write simultaneously data into the SRB 100, or vice versa.

The data processing within the RRB 102 is basically similar to the processing within the SRB 100. The receive handler 103 can write received data simultaneously to the RRB 102 while the API-thread tries to read data from it. However, in case of the occurrence of an irregular data packet, some special synchronization means between the API-thread send and the receive handler 103 are necessary.

For the sake of simplicity of the proposed buffer management system, it is assumed, that the API send call blocks, when the SRB 100 has not enough space, to store data from the send call and respectively, the receive API call blocks, when no data are stored within the RRB 102 while the receive call is raised.

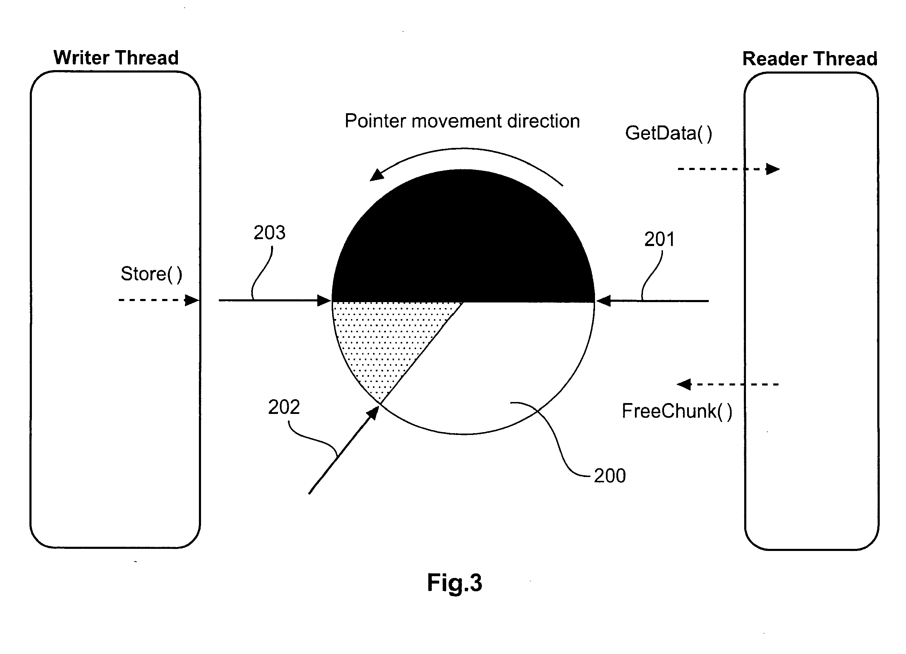

Fig. 3 shows a schematic representation for a process of a synchronization-free access to a memory ring buffer 200 which may provide for the send memory ring buffer (SRB) 100, the send token ring buffer (STRB) 101 or the receive ring buffer (RRB) 102.

Provided that one thread is only storing data into the ring buffer 200 and another independent thread is only reading data from the ring buffer 200, it can be possible to access the ring buffer 200 without any synchronization mechanism. For that, in general three pointers are provided for buffer access. A read pointer (RP) 201 marks the beginning of data stored within the ring buffer 200. A write pointer (WP) 202 denotes the beginning of an area, which is still free and can be used to store new data. A filled pointer (FP) 203 denotes begin of a buffer area that is already partially filled with data. However, the data between the FP 203 and the WP 202 should not be read by the reader thread, e.g. because these data are not yet acknowledged by the remote site. The region between the FP 203 and the RP 201 denotes data that can be read by the reader thread.

The region between the WP 202 and the RP 201 denotes the free space of the ring buffer 200 and can be used to store new data into the ring buffer 200. The region between the WP 202 and the FP 203 is the region with partly written data. However this data are not yet released for reading.

Following, movement of the individual pointers during the operations is described. When data are read (fetched) from the ring buffer 200, the RP 201 is moved forward by the amount of read data, so after the read operation it points again to the beginning of the unread area. The amount of the free area is increased by this amount. When data are written into the free region, the WP 202 is moved forward by the amount of written data. The area of partially written data is increased by this amount. In general, these data must be released for reading on special events, e.g. on data acknowledge. Such events, that move the FP 203 forward, can be generated by the reader thread using a method *FreeChunk.* So, the WP 202 is always driven by the writer thread, the RP 201 and the FP 203 are driven exclusively by the reader thread. Using the ring buffer 200 in this way, operations can be performed simultaneously by the reader and writer thread without any thread synchronization means.

Depending on a special usage of the ring buffer 200, the FP 203 can be omitted, e.g. when no acknowledge from a remote site is necessary. However, depending on a special acknowledgement implementation, also more than one instance of the WP 202 may be provided.

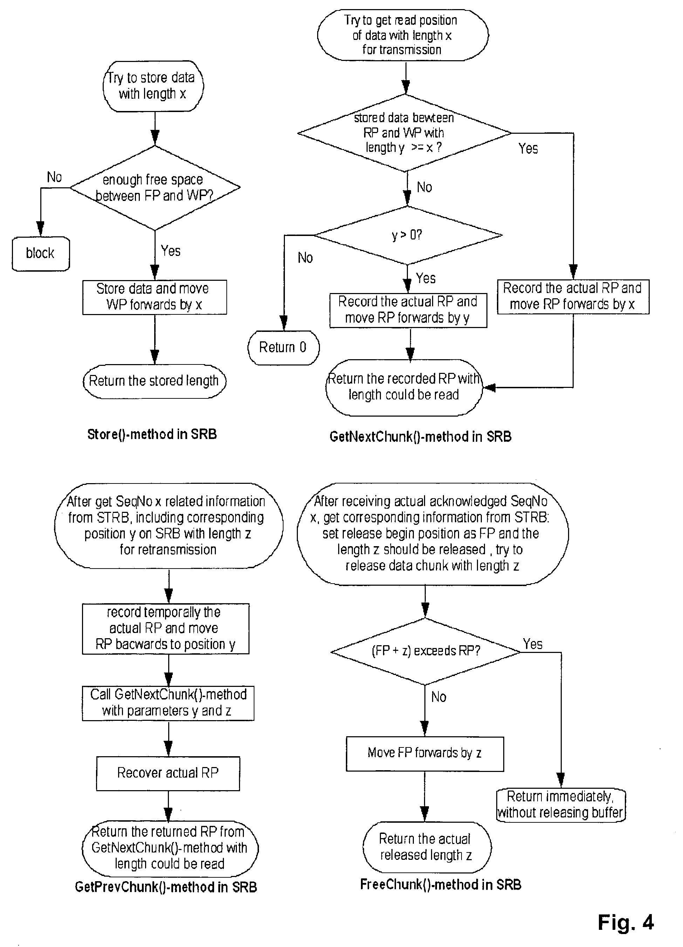

Referring to Fig. 4 to 10, further details are described. A proposed implementation buffer is described in an object-oriented semantics. It can be implemented in hardware, embedded software or as an application layer process. In Fig. 4 to 10, the same features are referred to by the same reference numerals used in Fig. 2 and 3.

Fig. 4 shows a schematic representation of methods which can be implemented in the send memory ring buffer (SRB) 100.

The SRB 100 is accessed through three pointers - a read pointer (SRB-RP) 300, write pointer (SRB-WP) 301 and filled pointer (SRB-FP) 302, which indicate access points to the SRB 100. Hereby the:
- The SRB-WP 301 can only be used by writer thread (API-Thread). The SRB-WP 301 points to the actual buffer address with enough free space, in which the data should be temporarily stored. If a data chunk has been successfully stored, the WP 202 should be moved ahead by the amount of stored data.
- The SRB-RP 300 can only be used by reader thread (send handler). The SRB-RP 300 points to the first byte, that is not yet read by the send handler 104. If a data chunk has been read successfully from the SRB 100, the SRB-RP 300 should be moved ahead by the amount of read data.
- The SRB-FP 302 is moved forwards by another reader thread (receive handler) in case of an acknowledge reception.

If a pointer points to the end of allocated space, a wrap around of the pointer is performed.

In general, a non-synchronized access to the SRB 100 is only possible, when just one writer thread (API-thread) writes into the SRB 100 and at most one reader thread (send handler 104) reads from it. This condition is not fulfilled in the described scenario, since besides the send handler 104 the receive handler 103 also accesses the SRB 100.

However, the SRB-RP 300 can only be moved by the send handler 104 (reader thread) for data (re-)transmission, and the SRB-FP 302 can only be moved by the receive handler (another reader thread) on condition that the transmitted packet is acknowledged by remote side application. That's why there is no collision between the SRB-RP 300 and SRB-FP 302, so thread synchronization is not needed. The SRB 100 on the sender side has four major methods to meet the needs for data temporal storage into ring buffer, for packet sending, for packet loss handling, and for releasing acknowledged data.

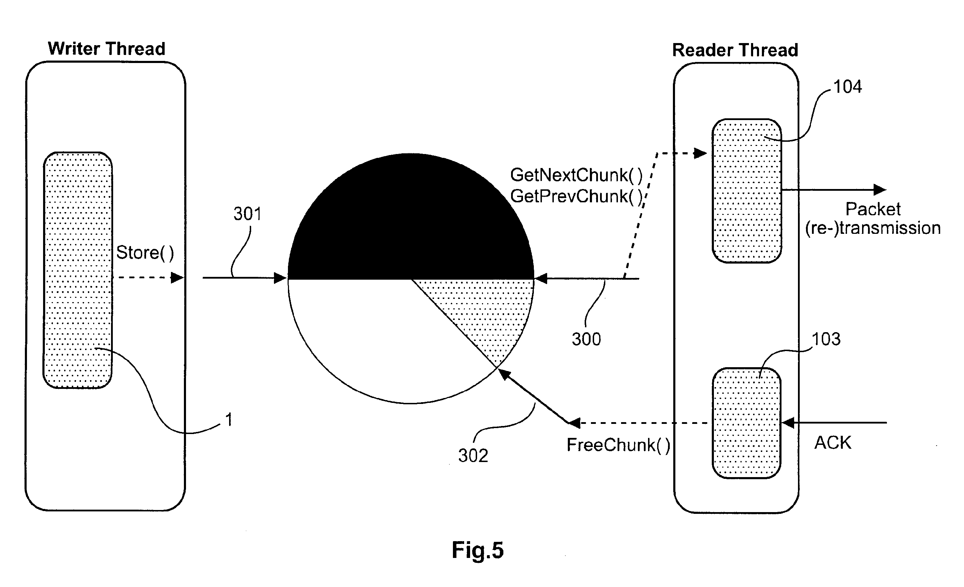

Fig. 5 shows a schematic representation of an interaction of the methods depicted in Fig. 4 with reader and writer threads.

The *Store()*-method in writer thread is used to store data temporarily into the SRB 100 and move the SRB-WP 301 correspondingly. In order to send new data, the *GetNextChunk()*-method is used to get the read position and the number of stored bytes from the reader thread (send handler). The RP is moved ahead as appropriated. If packet loss is detected, *GetPrevChunk()-*method is called to give the reader thread (send handler) the read position of the corresponding data packet and the length of the respective data chunk. If an acknowledgement (ACK) from the remote side is received, another reader thread (receive handler) calls the *FreeChunk()*-method to move the FP in SRB. The STRB has to be used while using *GetNextChunk()-, Get-PrevChunk () -* and *FreeChunk ()* -methods.

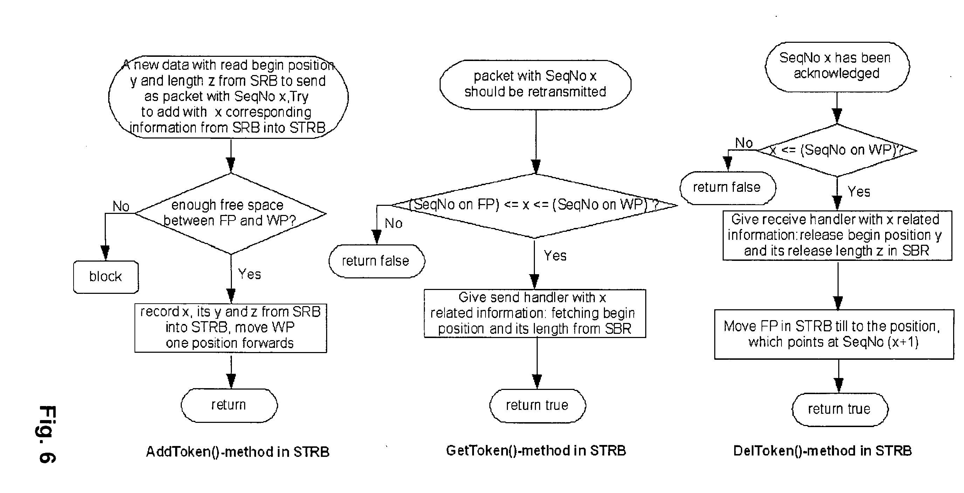

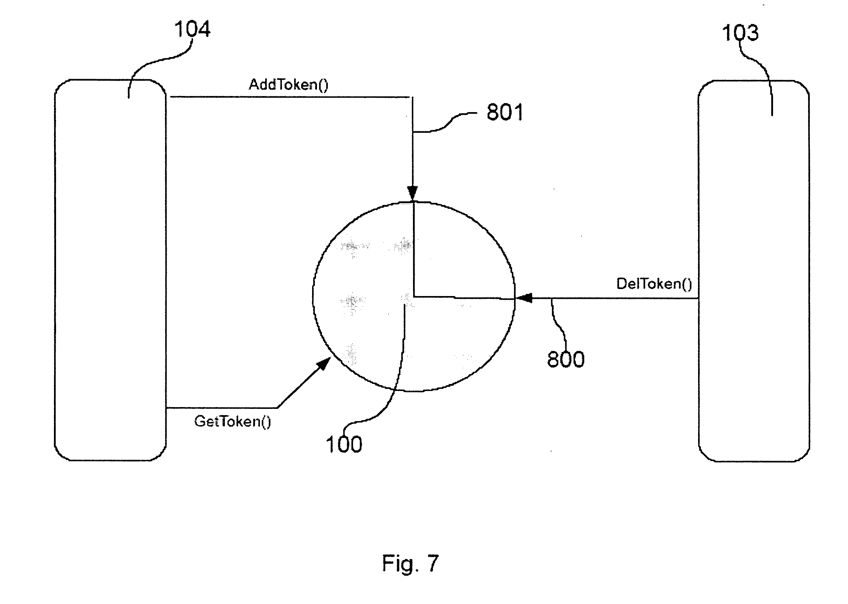

Referring to Fig. 6 and 7, the functionality of the send token ring buffer (STRB) 101 is described in further detail. Fig. 6 shows a schematic representation of three methods which can be implemented in the send token ring buffer (STRB) 101. Fig. 7 shows a schematic representation of an interaction of the methods depicted in Fig. 6.

While the send handler 104 fetches data from the SRB 100 in order to send it over the network, the STRB 101 is used to record the corresponding buffer positions and packet sizes in conjunction with the particular sequence number. As soon as packet loss is detected at the sender side, the send handler 104 can quickly resolve corresponding information of the puffer position of the lost data from the STRB 101 in order to retransmit the data.

Following prerequisites for the STRB 101 must be fulfilled:
- A data structure to record the information of a packet, including: sequence number, position of the first byte of data packet within the SRB, and packet size.
- An array with sufficient length to record sent packets must be allocated. Each element comprises of an array, described above.

The STRB 101 has only a STRB-FP 800 and a STRB-WP 801, not a RP:
- The STRB-FP 800 indicates the actual released position in the STRB 101, all packets with sequence numbers less than the sequence number on the STRB-FP 800 are already acknowledged by remote side application. The STRB-FP 800 should only be moved by reader thread.
- The STRB-WP 801 indicates the actual write position in the STRB 101, the packet with the sequence number on STRB-WP 801 is the recent transmitted packet. The STRB-WP 801 should only be moved by writer thread.

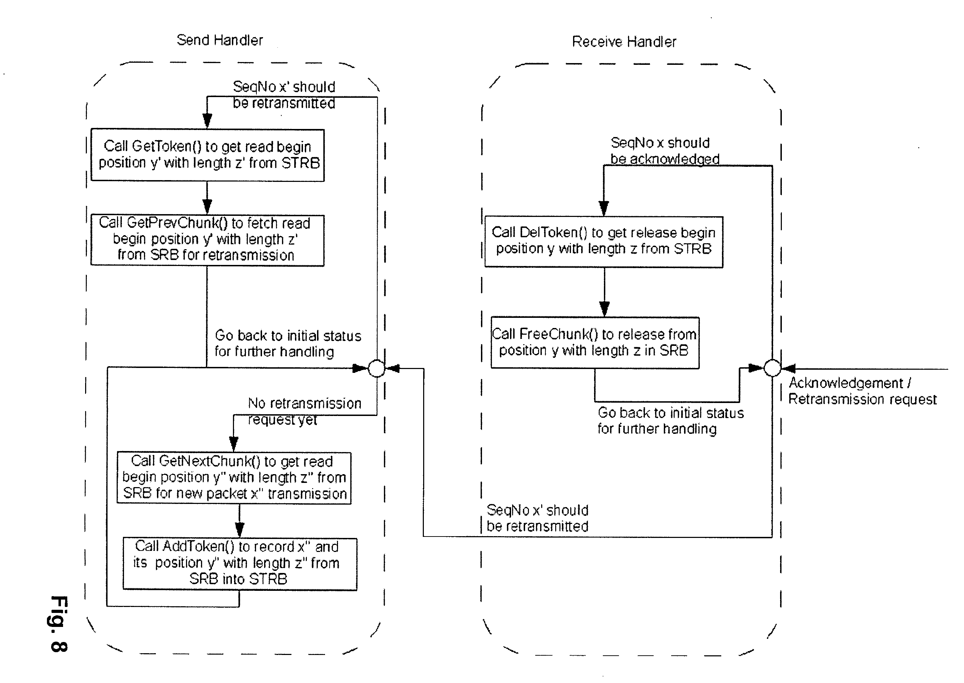

Fig. 8 shows a schematic representation of an interaction of the SRB- and STRB-methods within the receive handler 103 and the send handler 104.

Each time the send handler 104 sends a new data packet, which is fetched from the SRB 100, *AddToken()*-method is called to record corresponding packet information within the STRB 101. Once an ACK is received, the receive handler 103 processes it and calls *DelToken()*-method to move the STRB-FP 800 of the STRB 101 correspondingly; if *DelToken()* successfully implemented, the *FreeChunk()*-method is called to release acknowledged data from the SRB 100.

If a packet retransmission must be performed, the receive handler 103 passes only the sequence number to the send handler 104, so the send handler 104 calls *GetToken()*-method to get corresponding packet information from the STRB 101 in order to call the *GetPrevChunk()*-method to retransmit it.

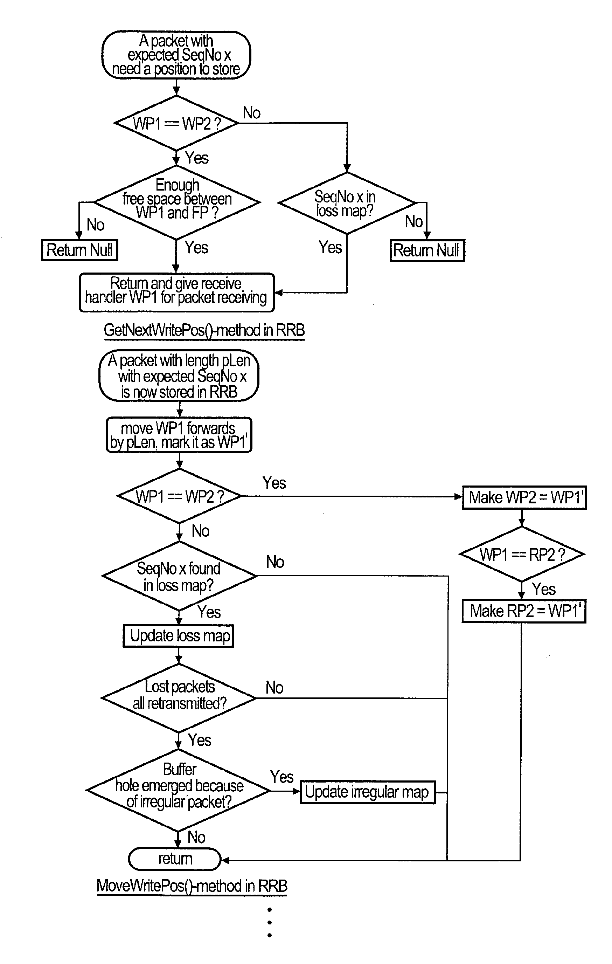

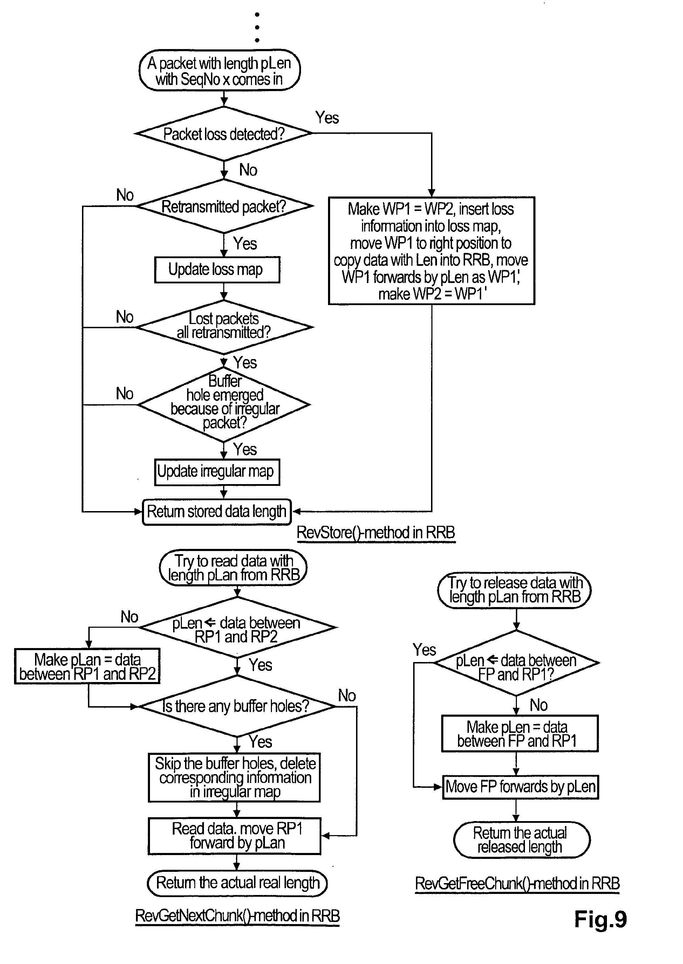

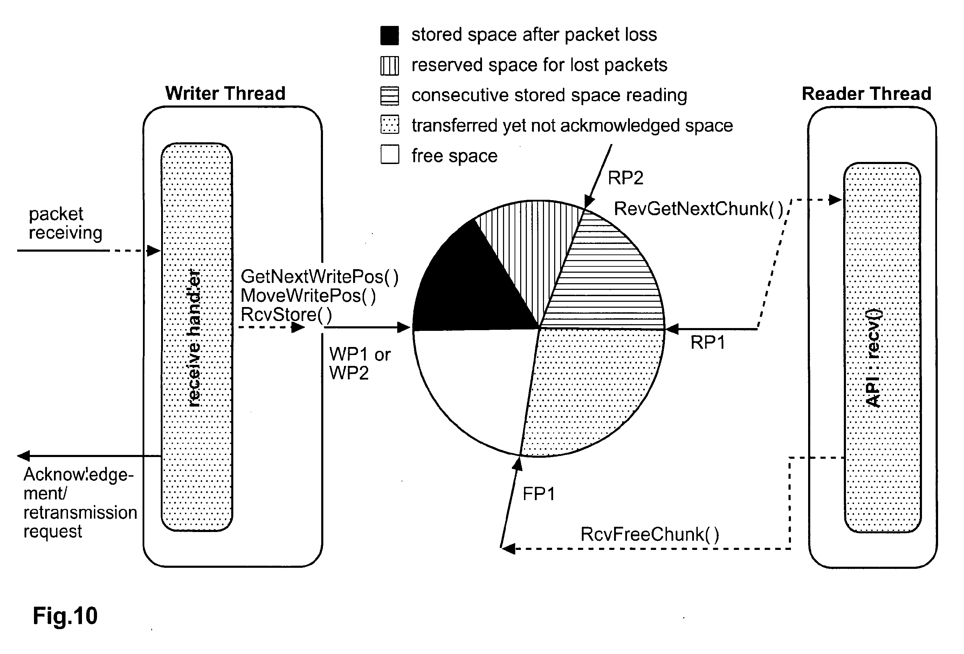

Referring to Fig. 9 and 10, the functionality of the receive memory ring buffer (RRB) 102 is described in further detail. Fig. 9 shows a schematic representation of five methods which can be implemented in the receive memory ring buffer (RRB) 102. Fig. 10 shows a schematic representation of an interaction of the methods depicted in Fig. 9.

The RRB 102 is used in order to receive data and store them at the right position. The basic functionality of the RRB 102 is similar to those of the SRB 100. However, it must be extended by some more means, since packet loss and the corresponding retransmission always has to be taken into account.

Besides the pointers RP , WP, and FP, which are referred to as RP1, WP1, and FP1, additional pointers, namely RP2 and WP2, are introduced within the RRB 102:
- A write pointer (WP1) can only be used by writer thread, to indicate the actual write position. If a data chunk has been stored successfully into the RRB 102, the WP1 should be moved ahead by the length of the stored chunk. When the sequence number of the received packet is not the consecutive one, a packet loss has been detected and the stored chunk has to be moved ahead to the proper position for that sequence number. So a gap in the buffer is arisen, in which retransmitted packets must be stored. When retransmitted packets arrive, the WP1 will be moved backwards, to fill the gap.
- In contrast to the WP1, a additional write pointer WP2 is never moved back, and so it depicts the outer bound of the RRB 102. So, it records the position of received packet with currently largest sequence number.
- A read pointer (RP1) has the same functionality as the SRB-RP 300 within the SRB 100.
- An additional read pointer (RP2) marks the upper bound of the consecutive data chunks for reading, and it can only be moved by writer thread. Once packet loss is detected, the RP2 points at the position of the last in-order and consecutive received data packet. It moves forwards only if all data packets are received in-order and consecutive, or if the first gap within the buffer is filled. Therefore the reader thread can read the stored data between the RP1 and RP2.
- A FP has the same functionality as the SRB-FP 302 in the SRB 100.

Referring now to Fig. 9, the RRB 102 provides five major methods to provide receiver buffer operations. Prerequisites for the RRB 102 methods:
- One additional data structure - here called loss map - must be defined. This map is introduced in order to record all the information about lost packets - (the first lost packet sequence number, the number of lost packets, the retransmission begin position in the RRB 102, the reserved free space for these packets, etc.). Since it is not known if there are any irregular packets during retransmission, free space is reserved for packet retransmission as *<number of total lost packets> * maxPayloadSize.* The *maxPayloadSize* is the maximal predefined data packet size transmitted over the network.
- Another data structure - here called irregular map - for recording the begin position and the length of a buffer hole, due to special cases of irregular packet loss. Since this irregular map data structure is accessed from a reader thread as well as from writer thread, its access has to be synchronized with a mutex. However, in well configured networks, transmission of irregular packets should happen quite seldom (< 1 % packet loss).

Referring to Fig. 10, three out of the five methods described above can be used from within the writer thread (receive handler 103), namely *GetNextWritePos()-, MoveWritePos()-,* and *RcvStore()*-methods.

*GetNextWritePos()* returns the position, at which next data packet should be stored. This could be an in-order and consecutive data packet, but also could be an incoming retransmitted packet.

If a data packet is successfully received into the position provided by *GetNextWritePos(), MoveWritePos()* is called to move the WP1. After moving WP1 *MoveWritePos()* has to test if this is a retransmitted one packet, in which case it has to also test whether any irregular packets cause a hole in reserved buffer space and update irregular map if a hole does exist. If the recently received data packet is in-order and consecutive, RP2 is also moved equal to WP1 by *MoveWritePos().* But if the recently received data packet is stored consecutive into RRB after packet loss, only the WP2 should be moved equal to WP1 by *MoveWritePos()* to mark the currently received packet with largest sequence number.

If a packet loss is detected in receive handler, *RcvStore()* is used to insert the corresponding lost information into loss map. The *RcvGetNextChunk()*-method is used by the API-Thread in order to fetch received data. The RP1 is moved, when data are fetched.

*RcvFreeChunk()*-method is called by API-thread to move FP after successful return from *RcvGetNextChunk(),* in order to free this space for further data packet reception.

The features of the invention as disclosed in the above description, in the claims and in the drawing may be of importance for the implementation of the various embodiments of the invention both individually and in any desired combination.

## Claims

1. A memory buffer system, which is connected to a computer network system, and a network data transport protocol provided for data transport in the computer network system, comprising:
- a send memory ring buffer (100), configured to receive send data from the user application and submit the send data via a thread-implemented send handler (104),
- a receiving memory ring buffer (102), configured to receive receive data via a thread-implemented receive handler (105) and pass data to the user application (1), and
- a send token ring buffer (101), configured to manage access to the sent data for the send handler (104) and the receive handler (103).

2. Memory buffer system according to claim 1, wherein at least one of the send memory ring buffer (100), the receiving memory ring buffer (102), and the send token ring buffer (101) is comprising at least two pointers selected from the following group of pointers:
- a read pointer, configured to point at the beginning of a occupied memory area occupied by stored data readable by a reader thread,
- a write pointer, configured to point at the beginning of a still free memory area capable of receiving new stored data in a writer thread, and
- a filled pointer, configured to point at the beginning of a filled memory area at least partially filled with stored data,
wherein the occupied memory area is located between the filled pointer and the read pointer, wherein still free memory area is located between the write pointer and the read pointer, and wherein the filled memory area is located between the write pointer and the filled pointer.

3. Memory buffer system according to claim 2, wherein the read pointer is configured to move forward by an amount of read data which are read from the occupied memory area.

4. Memory buffer system according to claim 2 or 3, wherein the write pointer is configured to move forward by an amount of written data which are written into the still free memory area.

5. Memory buffer system according to at least one of the claims 2 to 4, wherein at least one of the read pointer and the filled pointer is configured to be exclusively moved by the reader thread.

6. Memory buffer system according to claim 5, wherein a read pointer of the send memory ring buffer is configured to be exclusively moved by the send handler.

7. Memory buffer system according to claim 5 or 6, wherein a filled pointer of the send memory ring buffer is configured to be exclusively moved by the receive handler.

8. Memory buffer system according to at least one of the claims 2 to 7, wherein the receiving memory ring buffer is comprising a further read pointer and a further write pointer.

9. Memory buffer system according to at least one of the claims 2 to 8, wherein the write pointer is configured to be exclusively moved by the writer thread.

10. Memory buffer system according to at least one of the preceding claims, wherein the send token ring buffer is configured to have the send handler recorded data packet information in the send token ring buffer.

11. Memory buffer system according to at least one of the preceding claims, wherein the send token ring buffer is configured to provide data packet retransmission information to the send handler for a data packet retransmission.

12. Memory buffer system according to at least one of the preceding claims, wherein the send memory ring buffer (100), the receiving memory ring buffer (102), and the send token ring buffer (101) are implemented by an implementation selected from the following group of implementations: hardware implementation, embedded software implementation, and application layer process implementation.

13. A method for operating a memory buffer system in a multi-thread environment for managing data exchange between a user application (1) implemented on a computer, which is connected to a computer network system, and a network data transport protocol provided for data transport in the computer network system, the method comprising steps of:
- in a send memory ring buffer (100), receiving send data from the user application and submitting the send data via a thread-implemented send handler (104),
- in a receiving memory ring buffer (102), receiving receive data via a thread-implemented receive handler (103) and passing the receive data to the user application (1), and
- in a send token ring buffer (101), managing access to the sent data for the send handler (104) and the receive handler (103).

14. Method according to claim 13, wherein at least one of the send memory ring buffer (100), the receiving memory ring buffer (102), and the send token ring buffer (101) is implementing at least two pointers selected from the following group of pointers:
- a read pointer pointing at the beginning of a occupied memory area occupied by stored data readable by a reader thread,
- a write pointer pointing at the beginning of a still free memory area capable of receiving new stored data in a writer thread, and
- a filled pointer pointing at the beginning of a partially filled memory area at least partially filled with stored data,
wherein the occupied memory area is located between the filled pointer and the read pointer, wherein still free memory area is located between the write pointer and the read pointer, and wherein the filled memory area is located between the write pointer and the filled pointer.

15. Method according to claim 14, comprising a step of moving the read pointer forward by an amount of read data which are read from the occupied memory area.

16. Method according to claim 14 or 15, comprising a step of moving the write pointer forward by an amount of written data which are written into the still free memory area.

17. Method according to at least one of the claims 14 to 16, comprising a step of moving at least one of the read pointer and the filled pointer exclusively by the reader thread.

18. Method according to claim 17, comprising a step of moving a read pointer of the send memory ring buffer exclusively by the send handler.

19. Method according to claim 17 or 18, comprising a step of moving a filled pointer of the send memory ring buffer exclusively by the receive handler.

20. Method according to at least one of the claims 14 to 19, comprising a step of moving the write pointer exclusively by the writer thread.

21. Method according to at least one of the claims 13 to 20, comprising a step of having the send handler record data packet information in the send token ring buffer.

22. Method according to at least one of the claims 13 to 21, comprising a step of providing data packet retransmission information from the send token ring buffer to the send handler for a data packet retransmission.

23. A memory ring buffer (100; 101; 102) in a multi-thread environment implemented in a computer network system, comprising pointers as follows:
- a read pointer, configured to point at the beginning of a occupied memory area occupied by stored data readable by a reader thread,
- a write pointer, configured to point at the beginning of a still free memory area capable of receiving new stored data in a writer thread, and
- a filled pointer, configured to point at the beginning of a filled memory area at least partially filled with stored data,
wherein the occupied memory area is located between the filled pointer and the read pointer, wherein still free memory area is located between the write pointer and the read pointer, and wherein the filled memory area is located between the write pointer and the filled pointer.
